# EUROPÄISCHE PATENTANMELDUNG

(11) **EP 4 462 514 A2**
(43) Veröffentlichungstag der Anmeldung: **13.11.2024**
(21) Anmeldenummer: 24175213.8
(22) Anmeldetag: 10.05.2024
(51) Int. Cl.: H01M 4/587

(54) **ANODENMATERIAL FÜR LITHIUMIONENBATTERIEN BASIEREND AUF KOHLENSTOFF-AEROGEL-KOMPOSITEN**

(30) Priorität: 10.05.2023 DE 102023112318
(71) Anmelder: Deutsches Zentrum für Luft- und Raumfahrt e.V., 53227 Bonn (DE)
(72) Erfinder: Milow, Barbara, Hürth (DE); Kröner, Jessica, Königswinter (DE); Schwan, Marina, Leverkusen (DE)
(74) Vertreter: dompatent von Kreisler Selting Werner - Partnerschaft von Patent- und Rechtsanwälten mbB

(57) **Zusammenfassung**

Gegenstand der Erfindung ist ein Anodenmaterial für Lithium-Ionen-Batterien auf der Basis von Kohlenstoff-Aerogel-Kompositen und recycelter Aktivkohle (Rückgewinnungsruß) frei von Asche, silikatischen Verbindungen und Zinkkomponenten.

## Beschreibung

Gegenstand der Erfindung ist ein Anodenmaterial für Lithium-Ionen-Batterien auf der Basis von Kohlenstoff-Aerogel-Kompositen.

Die Herstellung von Lithium-Ionen-Batterien (LIB) ist ein energieintensiver Prozess, welcher große Mengen an Rohstoffen benötigt. Viele von den Materialien wie Graphit, Kobalt, Lithium sind in Deutschland und Europa nicht verfügbar. Die Verwendung sekundärer Rohstoffe ist daher ein wesentlicher Aspekt bei der Entwicklung der Batteriekomponenten. Als Anodenmaterial wird im Stand der Technik häufig Graphit verwendet. Sowohl die Herstellung von synthetischem Graphit als auch die Gewinnung und die Aufreinigung von natürlichem Graphit beeinflussen negativ den CO₂-Fußabdruck von Batterien. Durch die Verwendung alternativer Rohstoffe könnte dieser teilweise reduziert werden.

Eine ausgezeichnete Zyklenstabilität konnte bereits in LIB mit Anoden aus Biomasse wie Kaffeeschalen, Bananenfasern, Reis- oder Weizenstroh erreicht werden. Dabei spielt die poröse Nanostruktur eine entscheidende Rolle. Sie bietet eine große Elektrode-Elektrolyt-Grenzfläche für die Ladungsübertragungsreaktion.

WO 2020/020810 A1 beschreibt einen Füllstoff, der recycelte Aktivkohle (recovered carbon black; rCB; Rückgewinnungsruß) mit einer Iodzahl gemessen nach ASTM D-1510-17 im Bereich von 9 g/kg bis 160 g/kg enthält. Hier wird ein Komposit aus Kautschuk und dem vorgenannten Ruß beschrieben. Als Komposit wird insbesondere ein Reifen, beispielsweise Fahrzeug-Reifen beschrieben.

Sebastiäo M. R. Costa, David Fowler, Germano A. Carreira, Inês Portugal, and Carlos M. Silva (Production and Upgrading of Recovered Carbon Black from the Pyrolysis of End-of-Life Tires) Materials 2022, 15, 2030. https:// doi.org/10.3390/ma15062030 beschreiben, dass das wachsende Bewusstsein für die Abhängigkeit von fossilen Brennstoffen, die Verwertung von Abfällen und die Treibhausgasemissionen in den letzten Jahrzehnten zur Entwicklung neuer Lösungen für zahlreiche Märkte geführt hat. Die Reifenindustrie bildet hier keine Ausnahme, denn bei einer weltweiten Produktion von mehr als 1,5 Milliarden Reifen pro Jahr wirft ökologische Bedenken hinsichtlich des Recyclings oder der Entsorgung dieser Reifen am Ende ihrer Lebensdauer auf. Die Pyrolyse ermöglicht die Rückgewinnung sowohl von Energie als auch von Material aus Altreifen, wobei wertvolle gasförmige, flüssige und feste Fraktionen gewonnen werden, Letztere, bekannt als Rückgewinnungsruß (rCB), wurde in den letzten Jahren intensiv erforscht, um seine Qualität für Marktanwendungen sicherzustellen. Diese Studien haben gezeigt, dass die Qualität von rCB von der Zusammensetzung des Ausgangsmaterials und den Pyrolysebedingungen wie Reaktortyp, Temperaturbereich, Heizrate und Verweilzeit abhängt. Jüngste Entwicklungen von Aktivierungs- und Entmineralisierungstechniken zielen auf die Herstellung von rCB mit spezifischen chemischen, physikalischen und morphologischen Eigenschaften für bestimmte Anwendungen ab. Die Automobilindustrie, die den größten Rußverbraucher darstellt, hat sich spezifische Ziele gesetzt, um recycelte Materialien (wie rCB) nach den Prinzipien der Nachhaltigkeit und der Kreislaufwirtschaft zu verwenden. Diese Übersicht fasst die Pyrolyse von Altreifen zur Herstellung von Synthesegas, Öl und rCB zusammen, wobei der Schwerpunkt auf den Prozessbedingungen sowie Produktausbeute und -zusammensetzung. Eine weitere Analyse der Eigenschaften des Feststoffes, einschließlich ihres Einflusses auf die Verwendung von rCB als Ersatz für kommerzielles CB in der Reifenindustrie, Reinigungs- und Modifikationsnachbehandlungsprozesse für die rCB-Veredelung werden ebenfalls untersucht.

Somi Doja, Lava Kumar Pillari und Lukas Bichler, Renewable and Sustainable Energy Reviews 155 (2022) 111860; Processing and activation of tire-derived char: A review; beschreiben unter anderem die Entmineralisierung von Ruß mit Säure vor oder nach der Aktivierung. Weiterhin ist ein entsprechendes Verfahren aus Costa, S. M. R., et al. (2022). "Production and Upgrading of Recovered Carbon Black from the Pyrolysis of End-of-Life Tires." Materials 15(6): 2030 und Yuan, C.-S., et al. (2004). "Preparation of Sulfurized Powdered Activated Carbon from Waste Tires Using an Innovative Compositive Impregnation Process." Journal of the Air & Waste Management Association 54(7): 862-870 bekannt.

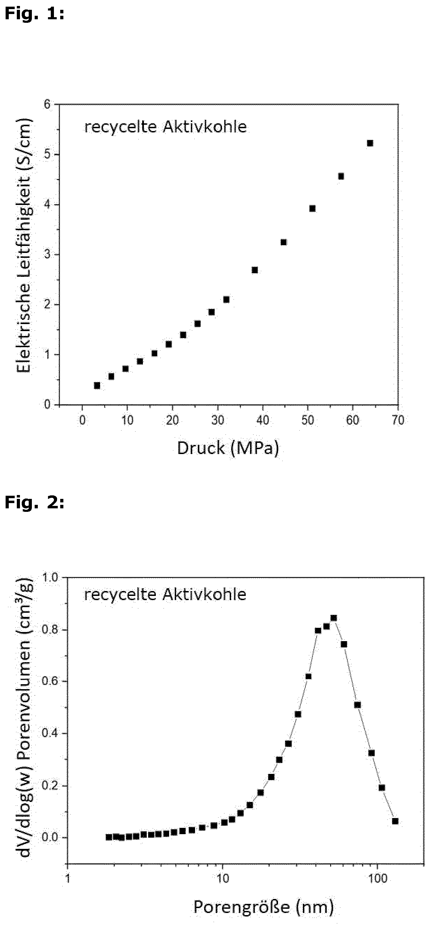

Recycelte Aktivkohle (rcB, Rückgewinnungsruß) im Sinne der vorliegenden Erfindung ist beispielsweise erhältlich nach einem Verfahren, das in WO 2013/095145 A1 und dem hier referierten Stand der Technik beschrieben ist. Die recycelte Aktivkohle (rcB, Rückgewinnungsruß) setzt sich aus etwa 99,4 Gew.-% Kohlenstoff; 0,1 Gew.-% Silizium und 0,5 Gew.-% Schwefel. Die elektrische Leitfähigkeit des Rußes ist in der Fig. 1 dargestellt. Die spezifische Oberfläche bestimmt mittels Stickstoff-Physisorption beträgt 67 m²/g, das Mesoporenvolumen liegt bei 0,4 cm³/g. Die Porengrößenverteilung (BJH Methode) ist in der Fig. 2 dargestellt. Die mittlere Porengröße liegt bei 50-70 nm.

Marina Schwan, Somi Doja, DLR-Magazin, 2020, 164, S. 30-31 beschreibt allgemein die Verwendung von Reifenabfällen, insbesondere Ruß in Form von recycelter Aktivkohle für Anodenmaterial von LIB. Durch einen thermischen Prozess (Pyrolyse) werden unter Ausschluss von Sauerstoff Altreifen aufbereitet. Hierbei werden die organischen Verbindungen des Altreifens zunächst aufgespalten. Die im Prozess entstehenden Gase werden kondensiert, wodurch sogenanntes TPO (Tire Pyrolysis Oil) entsteht. Das erzeugte Öl wird beispielsweise zur Energieerzeugung für industrielle Prozesse genutzt oder in Raffinerien weiterverarbeitet. Am Ende des Prozesses verbleibt ein kohlenstoffhaltiger Wertstoff - das sogenannte Roh-recovered Carbon Black (siehe auch WO 2013/095145 A1). Dieser Wertstoff enthält neben "Carbon Black" allerdings auch bis zu 25% Asche, welche aus bei der Reifenherstellung genutzten Additiven besteht. Dies sind im Wesentlichen silikatische Verbindungen und Zinkkomponenten.

Kohlenstoff-Aerogele sind aufgrund ihrer großen Oberfläche, des Porenvolumens und einstellbarer Porosität und Porengröße hervorragende Kandidaten für Anodenmaterialien in Batterien und Akkumulatoren. Sie zeigen eine hohe Leistung im Vergleich zum Graphit. Kohlenstoff-Aerogele können aus unterschiedlichen Ausgangsmaterialien wie Lignin, Cellulose, Chitin, Chitosan und Prekursoren wie Resorcin-Formaldehyd-, Melamin-Formaldehyd- und anderen organischen Aerogelen hergestellt werden.

Die Aufgabe der vorliegenden Erfindung besteht demgegenüber darin, Anodenmaterial für Lithium-Ionen-Batterien mit erhöhter Zyklenstabilität herzustellen und die Energiedichte der Lithium-Ionen-Batterien zu optimieren, insbesondere deren Lebensdauer und CO₂-Footprint, zu verbessern.

Diese Aufgabe wird in einer ersten Ausführungsform gelöst durch ein Anodenmaterial für eine Lithium-Ionen-Batterie umfassend ein Kohlenstoff-Aerogel-Komposit aus Aerogel und recycelter Aktivkohle (Rückgewinnungsruß), dadurch gekennzeichnet, dass die recycelte Aktivkohle (Rückgewinnungsruß) im Wesentlichen frei von Asche, silikatischen Verbindungen und Zinkkomponenten ist.

Die Erfindung betrifft somit ein leitfähiges Kompositmaterial, welches neben einem üblichen Binder ein Kohlenstoff-Aerogel und recycelte Aktivkohle (rcB, Rückgewinnungsruß) enthält und als Anodenmaterial in Lithium-Ionen-Batterien eingesetzt werden kann.

Die vorgenannte Aufgabe wurde insbesondere gelöst, in dem ein Kohlenstoff-Aerogel mit dem aufbereiteten Ruß aus Altreifen (recycelte Aktivkohle, Rückgewinnungsruß), kombiniert wurde. Hier ist von besonderer Bedeutung, dass der Ruß (Rückgewinnungsruß) im Wesentlichen keine Asche, silikatische Verbindungen oder Zinkkomponenten enthält. Diese würden die Leitfähigkeit eines entsprechenden Aerogel Ruß-Kompositmaterials reduzieren. Die erfindungsgemäße Kombination aus Kohlensotff-Aerogel und recycelter Aktivkohle führt zur deutlichen Verbesserung der spezifischen Kapazität. Die Entfernung von Asche, silikatischen Verbindungen und Zinkverbindungen aus dem Ruß erfolgt durch an sich bekannte Verfahren, beispielsweise durch Behandlung des Rußes mit Schwefelsäure.

Besonders bevorzugt im Sinne der vorliegenden Erfindung ist ein Anodenmaterial, das dadurch gekennzeichnet ist, dass es 1 bis zu 50 Gew.-%, insbesondere 2 bis 6 Gew.-% der recyclierten Aktivkohle (Rückgewinnungsruß) bezogen auf die Menge an Aerogel enthält. Bei zu niedrigem Anteil ist die recyclierten Aktivkohle (Rückgewinnungsruß) nicht homogen im Aerogel verteilt, die Vorteile des Materials sind nicht sichtbar. Höhere Anteile (>6 Gew.-%) wurden nicht untersucht; vermutlich wird Aktivkohle (Rückgewinnungsruß) mit niedriger spezifischer Oberfläche die gesamte Oberfläche des Komposits herabsetzen und somit die Kapazität womöglich negativ beeinflussen.

Eine weitere Ausführungsform der Erfindung besteht in einem Verfahren zur Herstellung des oben definierten Anodenmaterials, das dadurch gekennzeichnet ist, dass man
(a) die recyclierte Aktivkohle (Rückgewinnungsruß), die im Wesentlichen frei von Asche, silikatischen Verbindungen und Zinkkomponenten ist, während der Synthese eines Aerogels der Sol-Gel-Lösung zugibt oder
(b) die recyclierte Aktivkohle (Rückgewinnungsruß)mit einem Aerogel vermischt und
(c) die Karbonisierung nach an sich bekannten Verfahren durchführt.

Besonders bevorzugt im Sinne der vorliegenden Erfindung wird das Verfahren dadurch realisiert, man ein Aerogel organischen oder einem Biopolymer-basierten Ausgangsmaterial einsetzt. Biomasse, insbesondere aus Kaffeeschalen, Bananenfasern, Reis- oder Weizenstroh als Ausgangsmaterial zur Herstellung der Aerogele.

In Tabelle 1 sind die spezifischen Entladekapazitäten der reinen Materialien anhand von Laborzellen, sowie der Kompositmaterialien nach 1, 5 und 100 Zyklen angegeben. Die Zellen wurden mit 0,5C entladen. Es zeigt sich, dass die reinen Materialien (Kohlenstoff-Aerogel und recovered carbon black, Rückgewinnungsruß) nur sehr geringe Kapazitäten nach 100 Zyklen aufweisen. Durch die Kombination beider Materialien können spezifische Entladekapazitäten von bis zu 1560 mAh g⁻¹ nach 100 Zyklen erreicht werden. Die beim Akku entnehmbare Kapazität hängt vom Entladeverfahren ab, also vom Entladestrom, von der Entladeschlussspannung des Akkus (der Spannung, bei der die Entladung beendet wird), und selbstverständlich vom Ladezustand. Es sind verschiedene Entladeverfahren üblich, u.a.: Entladung mit konstantem Strom, Entladung über konstanten Widerstand oder Entladung mit konstanter Leistung. Je nach Entladeverfahren besitzt der Akku eine andere Kapazität. In einer aussagekräftigen Angabe der Nennkapazität ist es daher sinnvoll, sowohl den Entladestrom als auch die Entladeschlussspannung anzugeben.

Die Zugabe von recyclierter Aktivkohle (rCB, Rückgewinnungsruß) zu dem Aerogel führt zur Erhöhung der elektrischen Leitfähigkeit und einer deutlichen Steigerung der Kapazität.

Ein Anodenmaterial auf Basis von organischen oder Biopolymer-basierten Kohlenstoff-Aerogelen in Kombinationen mit aus Altreifen gewonnenem und gereinigtem Ruß (recovered Carbon Black; rCB; Rückgewinnungsruß) stellt eine Alternative dar. Diese Materialkombination führt nicht nur zu leistungsfähigen LIBs, sondern auch zur signifikanten Reduktion der Rohstoffabhängigkeit und erhöhter Nachhaltigkeit.

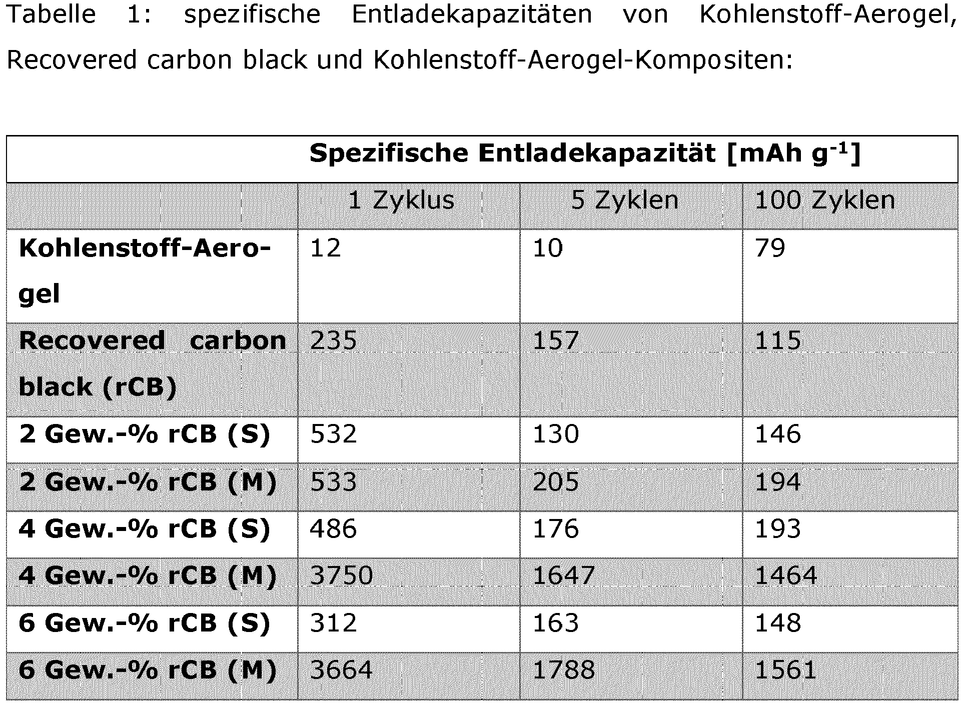

Die Entladekapazität wird beim Zyklieren der Zelle (Lade-Entlade-Zyklen) bestimmt.

Im nachfolgenden Ausführungsbeispiel wird die vorliegende Erfindung in nicht limitierender Weise weiter erläutert.

### Ausführungsbeispiel:

### Herstellung von Kohlenstoff-Aerogel-Kompositen

### a) Herstellung der Komposite

Die Komposite wurden:
1.) direkt während der Synthese der Aerogele (S) und
2.) nachträglich durch Mahlen (M) erzeugt.

Die Aerogele wurden nach bekanntem Verfahren (Muehlemann SE, Huber L, Zhao S, Matam SK, Koebel MM (2018) Facile synthesis of resorcinol-melamine-formaldehyde based carbon xerogel. Materials Today: Proceedings 5: 13776. DOI:https://doi.org/10.1016/j.matpr.2018.02.018) synthetisiert.

Zu 1.) 2 Gew.-%, 4 Gew.-% und 6 Gew.% des Additivs recovered carbon black (rCB, im Wesentlichen frei von Asche, silikatischen Verbindungen und Zinkkomponenten (Costa SMR, Fowler D, Carreira GA, Portugal I, Silva CM (2022) Production and Upgrading of Recovered Carbon Black from the Pyrolysis of End-of-Life Tires. Materials 15: 2030. Diese Publikation zeigt, dass abhängig von der Pyrolysetemperatur und von dem Druck die Zusammensetzung des rCB sehr unterschiedlich sein kann. Allgemein lässt sich zusammenfassen, dass die Anteile an Kohlenstoff bei 76 bis 90 Gew.-%, Wasserstoff 0,7 bis Gew.-%, Stickstoff bis zu 2 Gew.-% und Schwefel 2 bis 4,5 Gew.-% liegen)) wurden der Sol-Lösung während der Herstellung der Aerogele beigefügt.

Zu 2) Die organischen Aerogele wurden mit 2 Gew.-%, 4 Gew.-% und 6 Gew.-% des Additivs recovered carbon black (rCB, im Wesentlichen frei von Asche, silikatischen Verbindungen und Zinkkomponenten) vermischt und die Mischung in einer handelsüblichen Schwingmühle bei 30 Hz für 30 sec gemahlen.

### b) Karbonisierung

Die vorgenannten Aerogel-Komposite wurden in Stickstoffatmosphäre bei 800 °C 1 Stunde lang karbonisiert. Sie können bei Bedarf chemisch oder physikalisch aktiviert werden. Die Aktivierung konnte mit einem Gas (CO₂) oder Wasserdampf durchgeführt werden. Chemische Behandlungen mit Laugen (KOH) oder Säuren (HNO₃) können auch zur Aktivierung der Oberfläche führen.

### c) Elektrodenherstellung

- Binderlösung
   ∘ Der PVDF-Binder (Polyvinylidenfluorid) wurde in dem Lösemittel NMP (N-Methyl-2-Pyrrolidon) gelöst. Es wird so viel Lösemittel zugegeben bis eine viskose (η~ 1,7 mPa-s) Paste entstanden ist. Der Bindemittelgehalt beträgt regelmäßig bis zu 10 Gew.-%.
- Suspension
   ∘ Die Binderlösung wurde dem Kohlenstoff-Aerogel-Komposit in einem Masseverhältnis von 1:9 beigefügt und in einem Mörser für eine Stunde vermischt.
- Beschichtung
   ∘ Die Suspension wurde mit Hilfe des Rakelverfahrens auf eine handelsübliche Kupferfolie aufgebracht und für ca. 12 h bei 60 °C getrocknet. Anschließend wurden die Elektroden mit einem Durchmesser von 12 mm ausgestanzt.

### d) Batteriezellbau

### • Elektroden und Elektrolyt

Der Zusammenbau der Knopfzelle im Halbzellenaufbau wurde unter Argon-Atmosphäre durchgeführt. Als Kathode wurde reines Lithium und als Elektrolyt werden 80 µL LiPF₆ (Lithium-Hexafluorophosphat) verwendet. Die Knopfzelle wurde mit einer hydraulischen Presse bei 50 kg/cm zusammengepresst.

Die Aerogel-Komposit Elektrode wurde gegen reines Lithium in einem Halbzellenaufbau getestet. Als Elektrolyt wurde LiPF₆ (Lithium-Hexafluorophosphat) verwendet.

### e) Charakterisierung

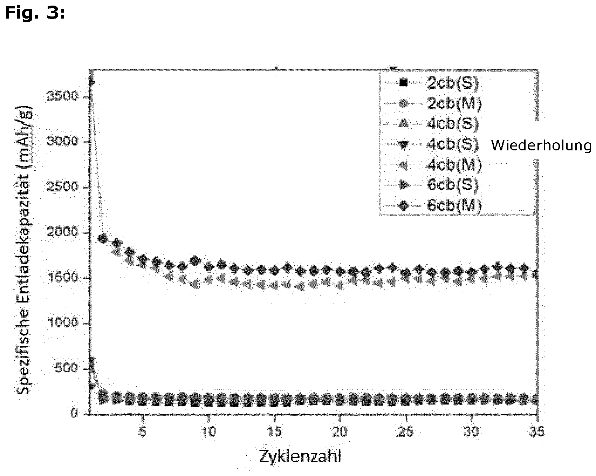

In Fig. 3 ist der Verlauf der Entladekapazität der wie zuvor beschriebenen Kohlenstoff-Aerogel-Komposite dargestellt. Die Halbzellen zeigen eine konstante Entladekapazität. Des Weiteren zeigt sich, dass durch die Verwendung des Kompositmaterials die Entladekapazität auf ca. 1500 mAh g⁻¹ erhöht werden konnte. Fig. 3 zeigt den Verlauf der Entladekapazität von Kohlenstoff-Aerogel-Kompositen über 35 Zyklen.

## Patentansprüche

1. Anodenmaterial für eine Lithium-Ionen-Batterie umfassend ein Kohlenstoff-Aerogel-Komposit aus Aerogel und recycelter Aktivkohle (Rückgewinnungsruß), **dadurch gekennzeichnet, dass** die Aktivkohle (Rückgewinnungsruß) frei von Asche, silikatischen Verbindungen und Zinkkomponenten ist.

2. Anodenmaterial nach Anspruch 1, **dadurch gekennzeichnet, dass** es 1 bis zu 50 Gew.-% der Aktivkohle (Rückgewinnungsruß) bezogen auf die Menge an Aerogel enthält.

3. Verfahren zur Herstellung von Anodenmaterial nach Anspruch 1, **dadurch gekennzeichnet, dass** man
(a) die Aktivkohle (Rückgewinnungsruß) während der Synthese eines Aerogels der Sol-Gel-Lösung zugibt oder
(b) die Aktivkohle (Rückgewinnungsruß) mit einem Aerogel vermischt und
(c) die Karbonisierung nach an sich bekannten Verfahren durchführt.

4. Verfahren nach Anspruch 3, **dadurch gekennzeichnet, dass** man ein Aerogel organischen Ursprungs oder ein Biopolymer-basiertes Ausgangsmaterial einsetzt.

5. Verfahren nach Anspruch 3 oder 4, **dadurch gekennzeichnet, dass** man Biomasse, insbesondere Kaffeeschalen, Bananenfasern, Reis- oder Weizenstroh als Ausgangsmaterial zur Herstellung der Aerogele einsetzt.

6. Verfahren nach Anspruch 3 oder 4, **dadurch gekennzeichnet, dass** man Lignin, Cellulose, Chitin und/oder Chitosan als Ausgangsmaterial zur Herstellung der Aerogele einsetzt.
